# EUROPÄISCHE PATENTSCHRIFT

(11) **EP 2 894 417 B1**
(45) Veröffentlichungstag und Bekanntmachung des Hinweises auf die Patenterteilung: **14.03.2018**
(21) Anmeldenummer: 14150545.3
(22) Anmeldetag: 09.01.2014
(51) Int. Cl.: F25B 1/10, F24D 3/18, F25B 30/02, F25B 31/00, F25B 49/02, F25B 13/00

(54) **Wärmepumpenvorrichtung**
Heat pump device
Système de pompe à chaleur

(43) Veröffentlichungstag der Anmeldung: 15.07.2015
(73) Patentinhaber: Stiebel Eltron GmbH & Co. KG, 37603 Holzminden (DE)
(72) Erfinder: Herrs, Martin, 37671 Höxter (DE); Holle, Björn, 31860 Emmerthal (DE)

(56) Entgegenhaltungen:
- EP-A1- 2 088 388
- EP-A1- 2 530 391
- EP-A2- 1 775 533
- EP-A2- 2 400 229

## Beschreibung

Die vorliegende Erfindung betrifft eine Wärmepumpenvorrichtung. Die Wärmepumpenvorrichtung, weist einen Verflüssiger, einen Verdampfer, ein elektronisches Expansionsventil, eine Verdichtereinheit mit einem ersten und zweiten Verdichter, die in Reihe geschaltet sind, und eine Steuereinheit zum Steuern des Verdampfers, des Verflüssigers, des elektronischen Expansionsventils und der Verdichtereinheit auf. Die Steuereinheit ist dazu ausgestaltet, den Betrieb des ersten und/oder zweiten Verdichters zu steuern, wobei die Steuereinheit eine Verdichtereinschalteinheit aufweist, welche ein Signal ausgibt, das den ersten Verdichter, den zweiten Verdichter oder den ersten und zweiten Verdichter in Abhängigkeit einer Außentemperatur, einer Heizkreis-Solltemperatur und/oder einer Heißgastemperatur aktiviert.

EP 2 088 388 A1 zeigt eine Wärmepumpenvorrichtung gemäß dem Oberbegriff des Anspruchs 1. Es ist eine Aufgabe der vorliegenden Erfindung, eine Wärmepumpenvorrichtung sowie ein Verfahren zum Steuern einer Wärmepumpenvorrichtung vorzusehen, welches einen verbesserten Wirkungsgrad sowie eine Erweiterung des Einsatzbereiches ermöglicht.

Diese Aufgabe wird durch eine Wärmepumpenvorrichtung nach Anspruch 1 gelöst.

Die Steuereinheit weist eine Drehzahlbegrenzungseinheit auf, wobei die Drehzahlbegrenzungseinheit die Drehzahlbereiche des ersten und/oder zweiten Verdichters begrenzt und in einer Verdichterdrehzahl-Abgleicheinheit ein Abgleich der Verdichterdrehzahlen im Zweiverdichter-Betrieb erfolgen kann.

Die Erfindung betrifft den Gedanken, den Einsatzbereich der Verdichter zu erweitern, indem beispielsweise Druck- und/oder Stromwächter vorgesehen sind und basierend auf deren Daten eine Leistungssteuerung der Wärmepumpe erfolgen kann.

Weitere Ausgestaltungen der Erfindung sind Gegenstand der Unteransprüche.

Vorteile und Ausführungsbeispiele der Erfindung werden nachstehend unter Bezugnahme auf die Zeichnung näher erläutert.
- Fig. 1: zeigt eine schematische Darstellung einer Wärmepumpenvorrichtung gemäß einem ersten Ausführungsbeispiel,
- Fig. 2: zeigt ein Blockschaltbild einer Steuereinheit gemäß dem ersten Ausführungsbeispiel,
- Fig. 3: zeigt eine grafische Darstellung des Zusammenhangs zwischen Außentemperatur und Heizkreissolltemperatur,
- Fig. 4: zeigt einen Graphen zur Veranschaulichung der Außentemperatur in Bezug auf die relative Heizleistung gemäß dem ersten Ausführungsbeispiel,
- Fig. 5: zeigt einen Graphen zur Veranschaulichung einer Leistungskorrektur bezüglich der Außentemperatur,
- Fig. 6: zeigt einen weiteren Graphen zur Veranschaulichung einer Leistungskorrektur bei der Wärmepumpenvorrichtung gemäß dem ersten Ausführungsbeispiel,
- Fig. 7: zeigt einen Graphen zur Veranschaulichung des Zusammenhangs zwischen dem Sollwert der Heizleistung und der Außentemperatur in einem zweiten Ausführungsbeispiel,
- Fig. 8: zeigt eine Darstellung eines Graphen zur Veranschaulichung des Zusammenhangs zwischen Außentemperatur und relativer Verdichterleistung,
- Fig. 9: zeigt einen Graphen zur Veranschaulichung des Zusammenhangs zwischen Leistungsvorgabe und Verdichterdrehzahl,
- Fig. 10: zeigt einen Graphen zur Veranschaulichung des Zusammenhangs zwischen der Solldrehzahl mit und ohne Drehzahlsperre,
- Fig. 11: zeigt einen Graphen zur Veranschaulichung des Zusammenhangs zwischen dem maximalen Strom und einer Außentemperatur,
- Fig. 12: zeigt einen Graphen zur Veranschaulichung des Zusammenhangs zwischen dem maximalen Strom und der Außentemperatur,
- Fig. 13: zeigt einen Graphen zur Veranschaulichung der Darstellung des Verlaufs der Begrenzung der minimalen Verdichterdrehzahl über die Zeit, und
- Fig. 14: zeigt ein Diagramm zur Veranschaulichung des Zusammenhangs zwischen der Begrenzung der Verdichterdrehzahl im Niederdruck und im Hochdruck bezogen auf den Niederdruck.

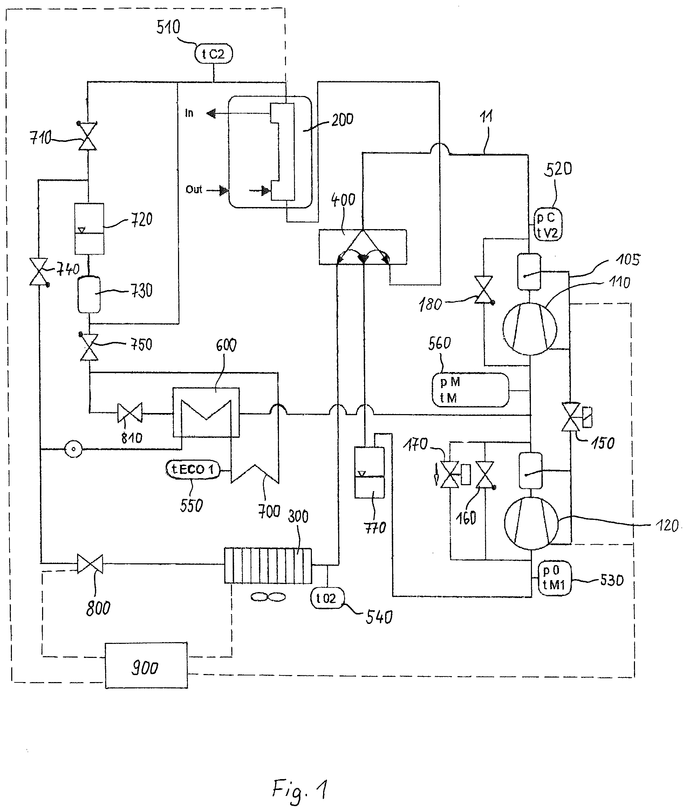

Fig. 1 zeigt eine schematische Darstellung einer Wärmepumpenvorrichtung gemäß einem ersten Ausführungsbeispiel. Die Wärmepumpenvorrichtung gemäß dem ersten Ausführungsbeispiel weist eine Verdichtereinheit 110 mit einem ersten und/oder zweiten Verdichter 110, 120, auf, die in Reihe geschaltet sind. Des Weiteren weist die Wärmepumpenvorrichtung einen Verflüssiger oder Kondensator 200, ein Vier-Zwei-Wegeventil 400, einen Verdampfer 300 auf. Der Kondenser 200 weist einen Eingang In (mit der Rücklauftemperatur der Wärmepumpe) und einen Auslauf auf mit der Vorlauftemperatur der Wärmepumpe. Der Kondenser 200 ist mit einem Ventil 710 gekoppelt. Das Ventil 710 ist mit einem liquid receiver 720 und einem Filter 730 gekoppelt. Ferner ist ein weiteres Ventil 750 vorgesehen, welches mit einem elektronischen Expansionsventil 810 gekoppelt ist. Dieses elektronische Expansionsventil 810 dient der Einspritzung von flüssigem Kühlmittel zwischen dem ersten und zweiten Verdichter 110, 120. Das elektronische Expansionsventil 810 ist wiederum mit einem Economizer 600 verbunden. In Reihe zu dem Economizer ist ein condensate pan 700 vorgesehen. Parallel zu dem liquid receiver 720, dem Filter 730 und dem Ventil 750 ist ein weiteres Ventil 740 vorgesehen. Dieses Ventil 740 ist in Reihe zu einem elektronischen Expansionsventil 800 geschaltet. Das elektronische Expansionsventil 800 ist wiederum in Reihe mit dem Verdampfer 300 geschaltet. Der Ausgang des Verdampfers 300 ist an einen Eingang des Vier-Zwei-Wegeventils 400 angeschlossen. Ein zweiter Ausgang des Vier-Zwei-Wegeventils 400 ist mit einem "liquid separator" 770 gekoppelt, der wiederum mit dem zweiten Verdichter 120 gekoppelt ist. Parallel zu dem zweiten Verdichter 120 sind zwei weitere Ventile 160, 170 vorgesehen. Parallel zu dem ersten Verdichter 110 ist ein weiteres Ventil 180 vorgesehen.

Des Weiteren weist die Wärmepumpenvorrichtung eine Vielzahl von Sensoren auf. Ein erster Sensor 510 erfasst die Verflüssigeraustrittstemperatur aus dem Kondenser 200. Ein zweiter Sensor 520 ist ein Hochdrucksensor und erfasst die Heißgastemperatur am Ausgang des Kompressors 110. Ein dritter Sensor 530 stellt den Niederdrucksensor dar und erfasst die Sauggastemperatur des Verdichters 120 im Niederdruck. Ein vierter Sensor 540 erfasst die Temperatur am Ausgang des Kompressors 110. Ein fünfter Sensor 550 erfasst die Temperatur am Ausgang des condensate pan 700. Ein sechster Sensor 560 stellt den Mitteldrucksensor dar und erfasst die Sauggastemperatur zwischen dem ersten und zweiten Verdichter 110, 120. Zwischen dem ersten und zweiten Kompressor ist ein Ölausgleichsventil 150 vorgesehen.

Ferner ist eine Steuereinheit 900 vorgesehen, welche mit dem ersten und zweiten Verdichter 110, 120, dem Verdampfer 300, dem Verflüssiger 200 und dem elektronischen Expansionsventil 800 gekoppelt ist, um diese zu steuern.

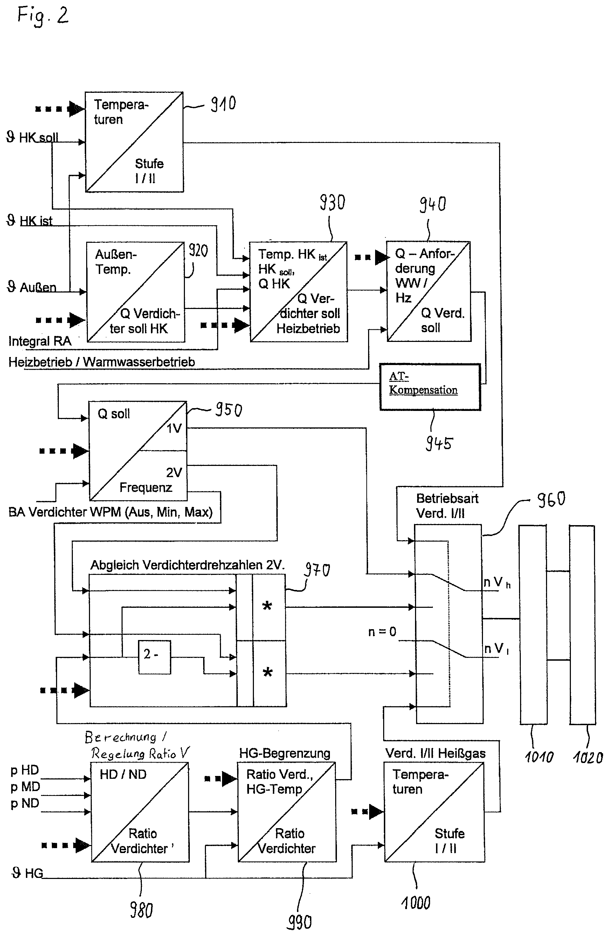

Fig. 2 zeigt ein Blockschaltbild der Steuereinheit der Wärmepumpenvorrichtung gemäß dem ersten Ausführungsbeispiel. Die Steuereinheit 900 weist eine Verdichtereinschalteinheit 910 auf zum Entscheiden, ob der erste und/oder zweite Verdichter 110, 120 aktiviert werden soll. Als Eingangssignale der Verdichtereinschalteinheit 910 dienen die Solltemperatur ϑ_{Hksoll} des Heißkreises und die Außentemperatur ϑ_{Außen}.

Die Steuereinheit 900 weist ferner eine Verdichtersollleistungs-Erfassungseinheit 920, eine Verdichtersollleistungs-Reglereinheit 930, eine Einheit 940, eine Außentemperatur-Kompensationseinheit 945, eine Kennfeld-Verdichtereinheit 950, eine Betriebsart-Auswahleinheit 960, eine Verdichterdrehzahl-Abgleicheinheit 970, eine Druckverhältnis-Regelungseinheit 980, eine Heißgasbegrenzungseinheit 990, eine Heißgasregeleinheit 1000, eine Begrenzungseinheit 1010 und eine Einheit 1020 auf.

Die Verdichtersollleistungs-Berechnungseinheit 920 berechnet die Verdichtersollleistung mit der Außentemperatur ϑ_{Außen} als Eingangsparameter.

Der Ausgang der Verdichtereinschalteinheit 910 stellt ein Eingangssignal der Betriebsart-Auswahleinheit 960 dar. Mit anderen Worten, die Verdichtereinschalteinheit 910 gibt ein Signal aus, das eine erste oder zweite Betriebsart der Verdichter (ein oder zwei Verdichter sind aktiviert) definiert. Die Eingangssignale der Verdichtereinschalteinheit 910 sind die Außentemperatur, die Heizkreis-Solltemperatur und eine Heißgastemperatur. Das Ausgangssignal stellt dann eine Anforderung eines Zweiverdichter-Betriebes (z. B. gemäß der zweiten Betriebsart) dar. Die Verdichtereinschalteinheit 910 aktiviert eine Zweiverdichter-Betriebsart in der Heizbetriebsart.

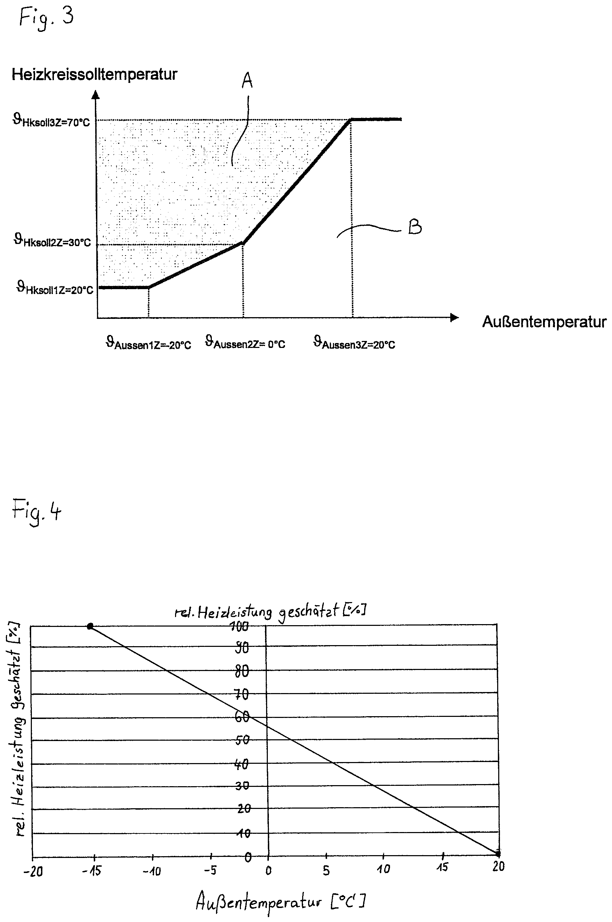

Fig. 3 zeigt eine grafische Darstellung eines Zusammenhangs zwischen Außentemperatur und Heizkreissolltemperatur und insbesondere die Grenze zwischen einem Zweiverdichter-Betrieb A und einem Einverdichter-Betrieb B. In Fig. 3 sind insbesondere drei Außentemperatur/Heizkreissolltemperaturpaare gezeigt. Beim ersten Paar beträgt die Außentemperatur - 20°C und die Heizkreissolltemperatur 20°C. Beim zweiten Paar beträgt die Außentemperatur 0°C und die Heizkreissolltemperatur 30°C. Beim dritten Paar beträgt die Außentemperatur 20°C und die Heizkreissolltemperatur 70°C. Es kann eine Hysterese im Zweiverdichter-Betrieb von 5 K vorhanden sein. Für Außentemperatur/Heizkreissolltemperatur-Wertpaare oberhalb des gezeigten Graphen wird ein Zweiverdichter-Betrieb A aktiviert, während für Außentemperatur/Heizkreissolltemperaturpaare, welche sich unterhalb des Graphen befinden, ein Einverdichter-Betrieb B aktiviert wird. Wenn die Außentemperatur des ersten Wertpaares kleiner als die Außentemperatur ist, welche wiederum ≤ als die Außentemperatur des zweiten Wertepaares im Zweiverdichter-Betrieb Heizen, dann wird zwischen den Stützstellenpaaren (Außentemperatur/Heizkreissolltemperatur) linear interpoliert und eine zu dieser interpolierten Außentemperatur zugehörige Grenztemperatur des Zweiverdichter-Betriebes kann ermittelt werden.

Wenn die Außentemperatur des zweiten Wertepaares ≤ der Außentemperatur ist und diese Außentemperatur ≤ der Außentemperatur des dritten Wertepaares (im Zweiverdichter-Betrieb Heizen) ist, wird zwischen dem zweiten und dritten Stützstellenpaar (Außentemperatur/Heizkreissolltemperatur) linear interpoliert und eine zu der Außentemperatur dazugehörige Grenztemperatur im Zweiverdichter-Betrieb wird ermittelt. Wenn die Außentemperatur ≤ der Außentemperatur des ersten Stützstellenpaares ist, dann entspricht die Grenztemperatur im Zweiverdichter-Betrieb der Heizkreissolltemperatur des ersten Stützstellenpaares (z. B. 20°C). Wenn die Außentemperatur größer als die Außentemperatur des dritten Stützstellenpaares (im Zweiverdichter-Betrieb Heizen) ist, dann entspricht die Grenztemperatur im Zweiverdichter-Betrieb der Heizkreissolltemperatur des dritten Stützstellenpaares (z. B. 70°C). Ist die Heizkreissolltemperatur größer als die Grenztemperatur im Zweiverdichter-Betrieb, so wird die Variable zur Anforderung des Zweiverdichter-Betriebes Kennfeldheizen auf "ein" gesetzt. Ist die Heizkreissolltemperatur kleiner als die Grenztemperatur im Zweiverdichter-Betrieb minus der Hysterese im Zweiverdichter-Betrieb, so wird die Variable Anforderung des Zweiverdichter-Betriebs Kennfeldheizen auf "aus" gesetzt.

Damit beschreibt die Fig. 3 eine Anforderung eines Zweiverdichter-Betriebes in Abhängigkeit des Kennfeldes, das in Fig. 3 dargestellt ist. Die Verdichtereinschalteinheit 910 kann einen Zweiverdichter-Betrieb (im Heizbetrieb) auch in Abhängigkeit der Heißgastemperatur durchführen. Wenn der Zweiverdichter-Betrieb aktiviert worden ist, dann führt dies zu einer Reduzierung der Heißgastemperatur. Diese Temperatur ist vorzugsweise unterhalb der Ansprechtemperatur eines Heißgastemperaturwächters. Dies ist vorteilhaft, weil somit das Ansprechen des Heißgastemperaturwächters verhindert oder bzw. verzögert wird. Wenn die Heißgastemperatur über einen Grenzwert steigt, dann wird mittels Verdichtereinschalteinheit 910 der Zweiverdichter-Betrieb aktiviert.

Optional kann der Zweiverdichter-Betrieb mittels der Verdichter-Einschalteinheit 910 angefordert werden, wenn eine Erkennung eines Kältemittelmangels vorhanden ist. Der Kältemittelmangel kann z. B. dann auftreten, wenn im Einverdichter-Betrieb mit dem Niederdruckverdichter sich Kältemittel im Hochdruck-Verdichter angesammelt, welches dann dem Kältekreis nicht mehr zur Verfügung steht. Wenn der Zweiverdichter-Betrieb aktiviert wird, dann wird das Kältemittel wieder in den aktiven Kältekreis zurückgeführt.

Wenn die Heißgastemperatur größer als ein Grenzwert ist, dann wird der Zweiverdichter-Betrieb aktiviert. Alternativ bzw. zusätzlich dazu kann der Zweiverdichter-Betrieb aktiviert werden, um eine Kältemittelrückführung zu ermöglichen, wenn der Hochdruck oberhalb eines Grenzwertes ist und eine Verdichterdrehzahl größer 0 ist.

Fig. 4 zeigt einen Graphen zur Veranschaulichung der Außentemperatur im Bezug auf die relative Heizleistung. Die Verdichtersollleistungs-Erfassungseinheit 920 weist die Außentemperatur als Eingangsparameter auf und gibt eine geschätzte Heizleistung an eine Verdichtersollleistungs-Reglereinheit 930 aus. Während einer Aufheizphase im Heizbetrieb nach einem Absenkbetrieb oder nach einer Brauchwasserbereitung kann eine Anpassung der Heizleistung der Wärmepumpe an den zu erwartenden Heizleistungsbedarf eines Gebäudes bei einer entsprechenden Außentemperatur erfolgen. Die Kennlinie zur Ermittlung der geschätzten Heizleistung basierend auf der Außentemperatur kann über zwei Stützstellen definiert werden. Die erste Stützstelle wird durch das Wertepaar Außentemperatur-Auslegungspunkt Heizen und erwarteter Heizleistungsbedarf 100% definiert. Durch den Parameter Außentemperatur-Auslegungspunkt Heizen wird eingestellt, bei welcher Außentemperatur die Wärmepumpe eine Abgabeleistung von 100% erbringt. Die zweite Stelle wird durch das Wertepaar Raumsolltemperatur und erwarteter Heizleistungsbedarf 0% definiert. Die Raumsolltemperatur kann z. B. 20°C darstellen. Es wird eine lineare Interpolation zwischen den oben genannten Schnittstellen durchgeführt und ist in Fig. 4 gezeigt.

Die Verdichtersollleistungs-Regeleinheit 930 empfängt als Eingangsgröße die Heizkreissolltemperatur, die Heizkreis-Isttemperatur, die geschätzte Heizleistung von der Verdichtersollleistungs-Erfassungseinheit 920 und eine relative integrale Regelabweichung. Aus diesem Eingangssignal wird eine Vorgabe der Heizleistung ausgegeben. Der Heizleistungsregler kann eine maximale Leistung von zwischen 100 und 200%, eine minimale Leistung von zwischen 0 und 100% (default 50%), einen I-Anteil von 0 bis 100% (default 50%) und einen P-Anteil von zwischen 0 bis 100% (default 5%) aufweisen. Zur Verkopplung des Reglers für das Stufenschalten in der Wärmepumpe mit dem Regler für die Anpassung der Abgabeleistung der Wärmepumpe kann die relative integrale Regelabweichung verwendet werden.

Die Verdichtersollleistungs-Regeleinheit 930 kann über einen Integralanteil und einen Proportionalanteil verfügen. Die Leistungsvariation des Reglers des Integralanteils entspricht (1 - (relative Integral-Regelabweichung x dem I-Anteil des Heizleistungsreglers).

Der Proportionalanteil des Reglers 930 ermittelt den Proportionalanteil der Leistungsvariation des Heizleistungsreglers basierend auf der Regelabweichung der Heizkreistemperatur. Die Variablen (Heizkreissolltemperatur und Heizkreisisttemperatur) werden für den Proportionalanteil des Reglers zur Anpassung der Abgabeleistung der Wärmepumpe verwendet.

Der Proportionalanteil der Leistungsvariation des Heizleistungsreglers entspricht (1 - ((Heizkreistemperatur - Heizsolltemperatur) x dem P-Anteil des Heizleistungsreglers)). Die Leistungsvariation des Heizungsreglers entspricht der Leistungsvariation des Integralanteils des Heizleistungsreglers mal dem Proportionalanteil der Leistungsvariation des Heizleistungsreglers. Wenn die vorgegebenen Minimal- und Maximalwerte berücksichtigt werden sollen, dann entspricht die Leistungsvariation des Heizleistungsreglers dem Maximum [(Minimum [Leistungsvariation des Heizreglers; und der maximalen Leistung des Heizleistungsparameters]) und der minimalen Leistung des Heizleistungsreglers].

Die Leistungsvorgabe beim Heizbetrieb entspricht damit der geschätzten Heizleistung mal der Leistungsvariation des Heizleistungsreglers.

In der Außentemperatur-Kompensationseinheit 945 erfolgt eine Berücksichtigung der Außentemperatur bei der Berechnung der Sollleistung. Die Außentemperatur beeinflusst die Abgabeleistung der Wärmepumpe, wenn die Verdichterdrehzahl bzw. die Verdichterdrehzahlen konstant bleiben. Der Niederdruck steigt bei steigenden Außentemperaturen und damit erhöht sich die Sauggasdichte des Kältemittels am Verdichtereintritt. Damit erhöhen sich auch die geförderte Kältemittelmenge im Kältekreis und die Abgabeleistung. Die Abhängigkeit der Leistung von der Außentemperatur beeinflusst somit die Berechnung der Verdichterdrehzahlen, um eine gewünschte Abgabeleistung der Wärmepumpe einstellen zu können. Um diesen Einfluss zu berücksichtigen, erfolgt eine Außentemperatur-Kompensation in der Außentemperatur-Kompensationseinheit 945. Der Ausgang der Außentemperatur-Kompensationseinheit stellt damit die Sollleistung dar. In der Kompensationseinheit 945 wird festgelegt, auf welchen relativen Wert die Verdichterdrehzahl bei einer Außentemperatur von 20°C gegenüber einem Außentemperaturauslegepunkt für die maximale Heizleistung reduziert werden muss, um die gleiche Abgabeleistung zu erzielen. Wenn beispielsweise eine Abgabeleistung von 10 kW gewünscht ist, dann wird bei einer Außentemperatur von -15°C eine Verdichterdrehzahl von 100 Hz benötigt. Bei einer Außentemperatur von 20°C wird nur eine Verdichterdrehzahl von 35 Hz benötigt. Die Referenztemperatur für die Berechnung der Leistungsanpassung ist die Auslegungstemperatur. Entspricht die Außentemperatur der Außentemperatur im Auslegungspunkt, dann entspricht der Außentemperatur-kompensierte Wert der Sollleistung dem unkompensierten Wert der Sollleistung. Ist die Außentemperatur größer als die Außentemperatur im Auslegungspunkt, dann wird der Außentemperatur-kompensierte Wert (pro Kelvin Temperaturdifferenz) um den Wert der Leistungsanpassung-Außentemperatur-Heizleistungsregler gegenüber der Sollleistung reduziert.

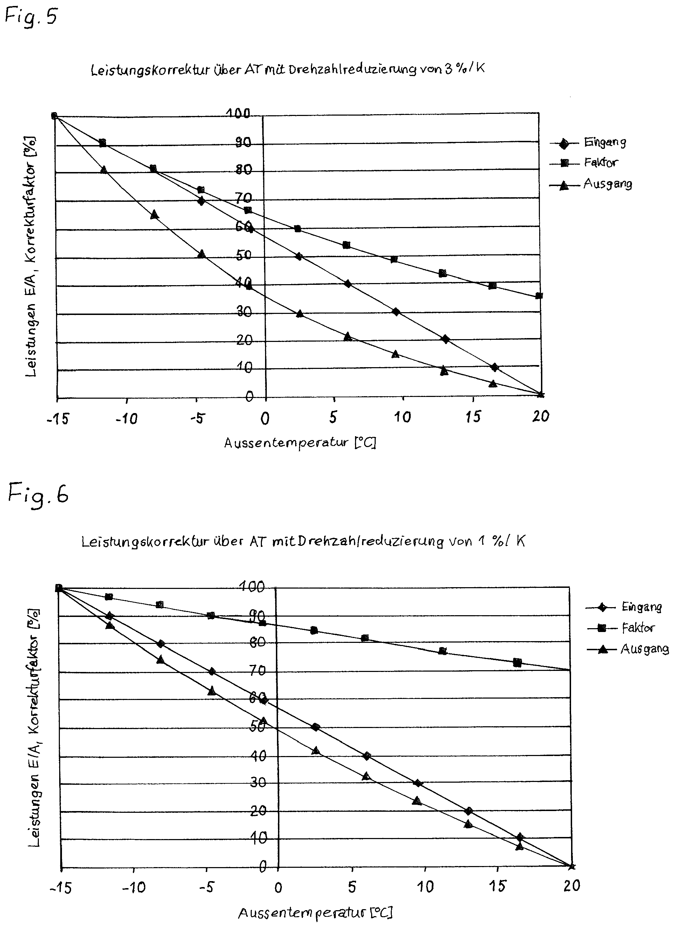

Fig. 5 zeigt einen Graphen zur Veranschaulichung einer Leistungstemperatur in Abhängigkeit der Außentemperatur. In Fig. 5 ist ein Beispiel der Leistungstemperatur in Abhängigkeit der Außentemperatur gezeigt, wobei der Wert der Leistungsanpassung auf 3% / K gewählt ist und die Außentemperatur im Auslegungspunkt im Heizbetrieb -15°C beträgt. Als Eingang wird der von der Einheit 940 empfangene Sollleistungswert bezeichnet. In Fig. 5 ist "Ausgang" als die Sollleistungsvorgabe bezeichnet. Der Wert "Faktor" beschreibt das Verhältnis zwischen Ein- und Ausgang.

Fig. 6 zeigt einen weiteren Graphen zur Veranschaulichung der Leistungskorrektur der Wärmepumpenvorrichtung. Während in Fig. 5 eine Leistungskorrektur von 3 % /K verwendet wurde, ist in der Fig. 6 eine Leistungskorrektur von 1 % / K vorgesehen.

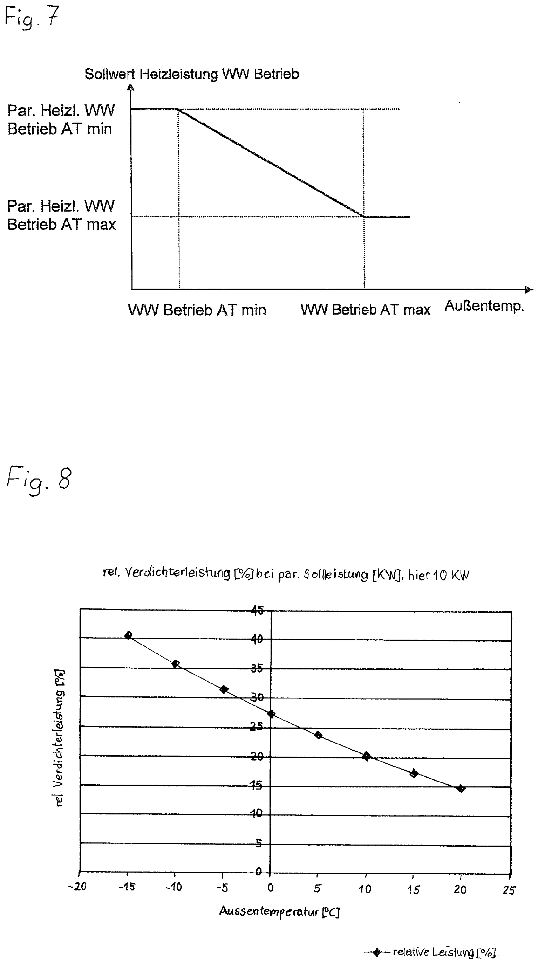

Fig. 7 zeigt einen Graphen zur Veranschaulichung eines Zusammenhangs zwischen dem Sollwert der Heizleistung und der Außentemperatur. Insbesondere ist in Fig. 7 der Sollwert der Heizleistung im Warmwasserbetrieb und die Außentemperatur als Y- bzw. X-Achse dargestellt. Auf der X-Achse ist ferner eine minimale Außentemperatur und eine maximale Außentemperatur gezeigt. Auf der Y-Achse ist die dazugehörige Heizleistung dargestellt. Bei der minimalen Außentemperatur ist die Heizleistung größer als bei der maximalen Außentemperatur.

Eine Anforderung des Zweiverdichter-Betriebes bei der Warmwasserbereitung kann in Abhängigkeit der Heizgastemperatur erfolgen. Wenn der Zweiverdichter-Betrieb aktiviert wird, dann wird die Heizgastemperatur des Kältemittels reduziert, welche unterhalb der Ansprechtemperatur des Heizgastemperaturwächters liegt, um das Ansprechen des Temperaturwächters zu verhindern oder zu verzögern.

Um einen Kompromiss zwischen dem Wirkungsgrad der Wärmepumpe und einem Warmwasserkomfort erzielen zu können, werden verschiedene Heizleistungen der Wärmepumpe im Warmwasserbetrieb vorgegeben. Dies erfolgt basierend auf Parametern, mittels welcher die Heizleistung der Wärmepumpe im Warmwasserbetrieb bei Außentemperaturen von +20°C und bei -20°C einstellbar ist. Bei Außentemperaturen zwischen diesen Temperaturstützstellen wird die Heizleistung der Wärmepumpe im Warmwasserbetrieb linear interpoliert. Bei Temperaturen außerhalb der Stützstellen werden die Temperaturen der jeweiligen benachbarten Stützstellen zur Berechnung verwendet.

Fig. 8 zeigt eine Darstellung eines Graphen zur Veranschaulichung des Zusammenhangs zwischen Außentemperatur und relativer Verdichterleistung. Ist die Außentemperatur kleiner als die minimale Außentemperatur, dann entspricht die Sollheizleistung im Warmwasserbetrieb dem Wert der Sollleistung, welche der minimalen Außentemperatur zugeordnet ist. Ist die Außentemperatur größer als die maximale Außentemperatur, dann entspricht die Sollheizleistung demjenigen Wert der Sollheizleistung, welcher der maximalen Außentemperatur entspricht. Dies ist in Fig. 7 ebenfalls zu sehen. Für Außentemperaturen kleiner als die minimale Außentemperatur bleibt der Wert der Sollheizleistung gleich. Für Temperaturen oberhalb der maximalen Außentemperatur bleibt der Wert der Sollheizleistung ebenfalls gleich.

Die derart berechneten Werte gelten unabhängig von einem Ein- oder Zweiverdichterbetrieb.

In Fig. 8 ist der Zusammenhang zwischen der Außentemperatur und der relativen Verdichterleistung dargestellt.

In Abhängigkeit der Betriebsart (Heizbetrieb/Warmwasserbetrieb) wird der Ein- oder Zweiverdichter-Betrieb gesteuert und die Steuerung der Vergabeleistung wird damit zusammengeführt. Ist der Warmwasserbetrieb aktiv, dann entspricht die Anforderung eines Zweiverdichter-Betriebs in Abhängigkeit der Heizgastemperatur der Anforderung eines Zweiverdichter-Betriebes in Abhängigkeit der Heizgastemperatur. Ferner entspricht die Vorgabe der Heizleistung der Vorgabe der Heizleistung einer Warmwasserbereitung.

Ist der Warmwasserbetrieb nicht aktiv, dann entspricht die Anforderung des Zweiverdichter-Betriebes in Abhängigkeit der Heizgastemperatur der Anforderung des Zweiverdichter-Betriebes in Abhängigkeit der Heizgastemperatur. Die Sollleistung beim Heizen entspricht dann der Sollleistung beim Heizen Hz.

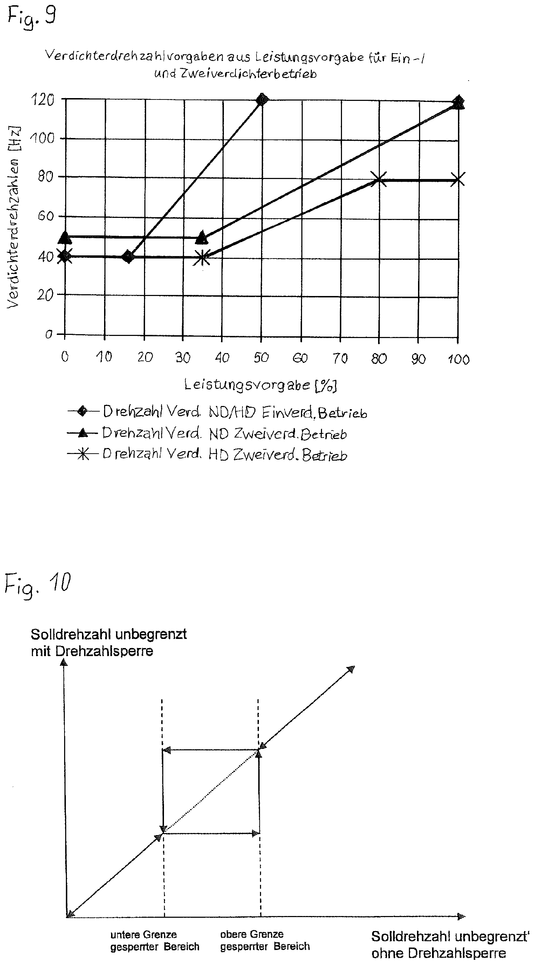

Fig. 9 zeigt einen Graphen zur Veranschaulichung des Zusammenhangs zwischen Leistungsvorgabe und Verdichterdrehzahl. In Abhängigkeit der Leistungsvorgabe erfolgt eine Vorsteuerung der Verdichterdrehzahl im Einverdichter-Betrieb und im Zweiverdichter-Betrieb. In Fig. 9 sind insbesondere drei Graphen gezeigt. Der erste Graph zeigt die Drehzahl des Verdichters bei Niederdruck ND/Hochdruck HD im Einverdichter-Betrieb. Der zweite Graph zeigt die Drehzahl des Verdichters beim Niederdruck im Zweiverdichter-Betrieb und der dritte Graph zeigt die Drehzahl des Verdichters bei Hochdruck im Zweiverdichter-Betrieb. Die in Fig. 9 gezeigten Graphen stellen Interpolationen von sechs verschiedenen Wertepaaren dar. Das erste Wertepaar bezieht sich auf einen Einverdichter-Betrieb und die Leistungsvorgabe beträgt 12% und die Vorsteuerung der Verdichterdrehzahl beträgt 30 Hz. Das zweite Wertepaar betrifft ebenfalls einen Verdichterbetrieb und weist eine Leistungsvorgabe von 50% und eine Vorsteuerung der Verdichterdrehzahl von 120 Hz auf. Das dritte Wertepaar betrifft einen Zweiverdichterbetrieb und weist eine Leistungsvorgabe von 35% bei einer Vorsteuerung von 50 Hz auf. Das vierte Wertepaar betrifft ebenfalls einen Zweiverdichter-Betrieb und weist eine Leistungsvorgabe von 35% bei einer Vorsteuerung von 40 Hz auf. Das fünfte Wertepaar betrifft einen Zweiverdichter-Betrieb und weist eine Leistungsvorgabe von 100% bei einer Vorsteuerung von 120 Hz auf. Das sechste Wertepaar betrifft ebenfalls einen Zweiverdichter-Betrieb und weist eine Leistungsvorgabe von 80% bei einer Vorsteuerung der Verdichterdrehzahl von 80 Hz auf.

Durch diese Wertepaare kann ein Kennfeld ermittelt werden, mit Hilfe dessen die Vorgabeleistung in eine Vorsteuerung der Verdichterdrehzahl im Einverdichter-Betrieb, eine Vorsteuerung der Verdichterdrehzahl im Zweiverdichter-Betrieb bei Niederdruck und in eine Vorsteuerung der Verdichterdrehzahl im Zweiverdichter-Betrieb bei Hochdruck ermittelt werden kann. Durch das erste und zweite Wertepaar kann eine Kennlinie mittels linearer Interpolation ermittelt werden. Eine extra Polation über diese Werte hinaus erfolgt, indem die Drehzahlwerte bei Verlassen des eingeschlossenen Bereichs gleich denen der zugeordneten Bereichsgrenzen sind, d. h. die Drehzahlwerte außerhalb des ersten und zweiten Wertepaares bleiben konstant. Mit Hilfe der Kennlinie kann aus der Leistungsvorgabe die Vorsteuerung der Verdichterdrehzahl im Einverdichter-Betrieb berechnet werden.

Das dritte und fünfte Wertepaar beschreibt Punkte auf einer Kennlinie, welche durch lineare Interpolation ermittelt werden. Eine extra Polation erfolgt über den durch die beiden Punktepaare eingeschlossenen Wertebereich der Leistungsvorgabe hinaus, indem die Drehzahlwerte bei Verlassen des eingeschlossenen Bereichs denen der zugeordneten Bereichsgrenzen entsprechen. Mit Hilfe dieser Kennlinie kann aus der Vorgabeleistung die Vorsteuerung der Verdichterdrehzahl im Niederdruckbereich bei einem Zweiverdichter-Betrieb berechnet werden. Wenn die Vorgabeleistung den eingeschlossenen Bereich verlässt, so wird als Ausgangsgröße der berechnete Drehzahlwert an den Bereichsgrenzen beibehalten.

Das vierte und sechste Wertepaar beschreibt Punkte einer Kennlinie, welche durch eine lineare Interpolation gebildet werden. Eine extra Polation über den eingeschlossenen Wertebereich hinaus erfolgt, indem die Drehzahlwerte bei Verlassen des umschlossenen Bereichs den Drehzahlwerten der Bereichsgrenze entsprechen. Mit Hilfe dieser Kennlinie kann aus der Vorgabeleistung die Vorsteuerung der Verdichterdrehzahl bei Hochdruck und im Zweiverdichter-Betrieb errechnet werden. Überschreitet die Vorgabeleistung den eingeschlossenen Bereich, so entspricht die Ausgangsgröße den berechneten Drehzahlwerten an den Bereichsgrenzen.

In der Druckverhältnis-Regeleinheit 980 erfolgt eine Berechnung der Druckverhältnisse der Verdichter. Als Eingangsgrößen wird der Niederdruck ND, der Mitteldruck MD und der Hochdruck HD verwendet, um ein entsprechendes Verhältnis zu berechnen und auszugeben. Im Zweiverdichter-Betrieb kann das Druckverhältnis der Verdichter abgeglichen werden, um die Effizienz des Kältekreises zu optimieren. Das Druckverhältnis der Verdichter wird ermittelt und daraus wird ein Quotient gebildet. Aus den Druckverhältnissen der einzelnen Verdichter wird wiederum ein Quotient gebildet. Das Ausgangssignal der Druckverhältnisregeleinheit 980 kann eine Freigabe der Heizgastemperaturbegrenzung darstellen.

In der Heizgasbegrenzungseinheit 990 wird in Abhängigkeit der Heizgastemperatur und der Freigabe von der Druckverhältnisregeleinheit 980 eine Freigabe der Heizgasbegrenzung ermittelt. Die Heizgastemperaturbegrenzung begrenzt die Heizgastemperatur des Kältekreises auf einen Wert, welcher unterhalb der Ansprechtemperatur eines Heizgastemperaturwächters liegt, um dessen Ansprechen zu verhindern oder zu verzögern. Zur Reduzierung der Heizgastemperatur wird das Verhältnis der Druckverhältnisse graduell reduziert. Mit der Reduzierung der Verhältnisse der Druckverhältnisse kann auch eine Reduzierung der Heizgastemperatur korrespondieren. Steigt die Heizgastemperatur über einen Grenzwert, so wird das Verhältnis der Druckverhältnisse graduell reduziert, um die Heizgastemperatur zu senken. Die Heizgastemperatur-Begrenzung kann als eine Proportionalbegrenzung realisiert werden.

Beim Zusammenschalten der Stellsignale des Verhältnisses der Verdichter kann die Heizgastemperaturbegrenzung aktiv oder inaktiv sein. Wenn die Heizgastemperaturbegrenzung nicht aktiv ist, dann kann der Wert des Integralreglers direkt übernommen werden. Ist die Freigabe der Heizgastemperaturbegrenzung jedoch aktiv, dann wird der Wert des Integralreglers mit dem Wert des Reglers für die Heizgastemperaturbegrenzung gekoppelt.

In der Verdichterdrehzahl-Abgleicheinheit 970 kann ein Abgleich der Verdichterdrehzahlen im Zweiverdichter-Betrieb erfolgen.

Die Auswahl der Verdichterdrehzahlvorgaben erfolgt im Hinblick auf einen Einverdichter-Betrieb oder einen Zweiverdichter-Betrieb. Als Eingangsgrößen dient die Vorsteuerung der Verdichterdrehzahl im Niederdruck ND oder Hochdruck HD im Einverdichter-Betrieb. Aus der abgeglichenen Verdichterdrehzahl im Niederdruck Zweiverdichter-Betrieb, der abgeglichenen Verdichter-Drehzahl im Hochdruck im Zweiverdichter-Betrieb und einer Anforderung des Zweiverdichter-Betriebs in der Heizbetriebsart und einem Warmwasserbetrieb wird die Auswahl des Verdichters im Einverdichter-Betrieb, der Sollwert der Verdichterdrehzahl im Niederdruck unbegrenzt und der Sollwert der Verdichterdrehzahl im Hochdruck unbegrenzt ausgegeben. Es wird insbesondere bestimmt, welcher der beiden Verdichter im Einverdichterbetrieb zu aktivieren ist.

In einem Abtaubetrieb werden die Drehzahlen der Verdichter berechnete basierend auf einer Auswahl des Verdichters für den Einverdichter-Betrieb und ein Sollwert der Verdichterdrehzahl beim Abtauen im Niederdruck und im Hochdruck wird ausgegeben. In dem Abtaubetrieb werden die Verdichterdrehzahlen berechnet und eingestellt. In dem Einfachverdichter-Betrieb muss unterschieden werden, welcher der Verdichter in dem vorausgehenden Heizbetrieb eingeschaltet war.

Gemäß der Erfindung werden die Verdichterdrehzahlen in Abhängigkeit der gewählten Betriebsart ausgewählt. Somit wird in Abhängigkeit der Betriebsart (Stand By, Heizen, Kühlen), in Abhängigkeit der weiteren Betriebsart Regelbetrieb, Pump Down, Kalibrieren, Abtaubetrieb und Handbetrieb) die Sollwerte der Verdichterdrehzahl ND und die Sollwerte der Verdichterdrehzahl HD ausgewählt.

Gemäß der Erfindung kann eine Sperrung von unerwünschten Drehzahlbereichen der Verdichter vorgesehen werden. Dies kann in der Begrenzungseinheit 1010 erfolgen. Die Begrenzungseinheit 1010 soll dazu dienen, Drehzahlbereiche der Verdichter, in denen Resonanzen in der Verrohrung des Kältekreises an den Gehäusen oder dergleichen auftreten können, zu sperren bzw. zu vermeiden. Wenn im Zweiverdichter-Betrieb beide Verdichter mit sehr geringen Drehzahlunterschieden arbeiten, kann eine Schwebung auftreten, welche sich durch unangenehme Geräusche und durch eine erhöhte Materialbelastung äußern kann. Zur Vermeidung von Drehzahlresonanzen der einzelnen Verdichter wird um die einstellbare Frequenz ein gesperrter Drehzahlbereich mit einer vorbestimmbaren Breite vorgesehen. Wenn die Drehzahl sich außerhalb des gesperrten Bereichs befindet, greift die Regel nicht weiter ein. Wenn die Drehzahl sich jedoch in dem gesperrten Bereich befindet, verbleibt die Drehzahl außerhalb des gesperrten Bereichs, bis sie den gesperrten Bereich wieder verlassen hat. Anschließend erfolgt kein weiterer Eingriff in die Regelung.

Fig. 10 zeigt einen Graphen zur Veranschaulichung des Zusammenhangs zwischen der Solldrehzahl mit und ohne Drehzahlsperre. Wie in Fig. 10 gezeigt, wird der Drehzahlbereich zwischen der unteren und oberen Grenze des gesperrten Bereichs nicht angefahren. Vielmehr wird die Drehzahl so geregelt, dass sie sich außerhalb des gesperrten Bereichs befindet.

Die Einheit 1020 dient der Begrenzung der Verdichterdrehzahlen. Im Verdichterbetrieb für den eingesetzten Niederdruck- und Hochdruckverdichter kann der Verdichter in einem zulässigen Bereich verwendet werden, welcher durch den maximal zulässigen Hochdruck, das maximal zulässige Druckverhältnis HD/ND und die maximal zulässige elektrische Leistungsaufnahme begrenzt wird. Um ein Ansprechen von Überwachungssensoren bzw. Wächtern zu vermeiden, tritt eine Drehzahlbegrenzung der Verdichter in Kraft, wenn eine Annäherung an die o. g. Grenzwerte stattfindet. Die Drehzahlbegrenzungen gelten für jeden der drei Grenzwerte unabhängig voneinander. Hierbei kann z. B. diejenige Begrenzung ausgewählt werden, die die größte Absenkung der Verdichterdrehzahl bewirken würde.

Gemäß der Erfindung kann eine Begrenzung der Verdichterdrehzahl in Abhängigkeit des Niederdruck-Hochdruckes erfolgen. Eine Steuerung kann hierbei den Druck auf der Hochdruckseite des Niederdruckverdichters auf Werte, die einen sicheren Verdichterbetrieb gewährleisten, beschränkt werden. Wenn der Wert des Hochdruckes über den Grenzwert steigt, so wird die Verdichterdrehzahl entsprechend reduziert, um den Druck in dem Kältekreis zu senken. Diese Begrenzung kann als eine Proportionalbegrenzung realisiert werden.

Gemäß der Erfindung kann eine Begrenzung der Verdichterdrehzahl hinsichtlich eines Hochdruckes auf der Hochdruckseite des Hochdruckverdichters erfolgen. Die Steuerung begrenzt dabei den Druck auf der Hochdruckseite des Verdichters HD auf Werte, die einen sicheren Verdichterbetrieb gewährleisten. Steigt der Hochdruck über den Grenzwert, so wird die Verdichterdrehzahl reduziert.

Gemäß der Erfindung erfolgt ebenfalls eine Begrenzung der Verdichterdrehzahl in Abhängigkeit des Druckverhältnisses. Hierbei begrenzt eine Steuerung das Druckverhältnis zwischen der Hochdruckseite und der Niederdruckseite des Verdichters auf Werte, die einen sicheren Verdichterbetrieb gewährleisten. Wenn das Druckverhältnis über den Grenzwert ansteigt, so wird die Verdichterdrehzahl reduziert, um den Druck zu senken. Die Begrenzung des Druckverhältnisses kann als eine Proportionalbegrenzung realisiert werden.

Die Erfindung betrifft ebenfalls eine Begrenzung des Druckverhältnisses zwischen der Hochdruckseite und der Niederdruckseite des Verdichters HD auf Werte, die einen sicheren Verdichterbetrieb ermöglichen. Wenn das Druckverhältnis zwischen Hochdruck und Niederdruck über dem Grenzwert liegt, so wird die Verdichterdrehzahl reduziert, um den Druck zu senken.

Gemäß der Erfindung kann die Verdichterdrehzahl ebenfalls begrenzt werden in Abhängigkeit der Stromaufnahme des Verdichters. Hierbei erfolgt die Begrenzung der Stromaufnahme auf Werte, die einen sicheren Verdichterbetrieb gewährleisten. Die hierfür benötigte Angabe hinsichtlich des Stromes kann aus den Kältekreisdaten berechnet werden oder über einen Strom im Sensor gemessen werden.

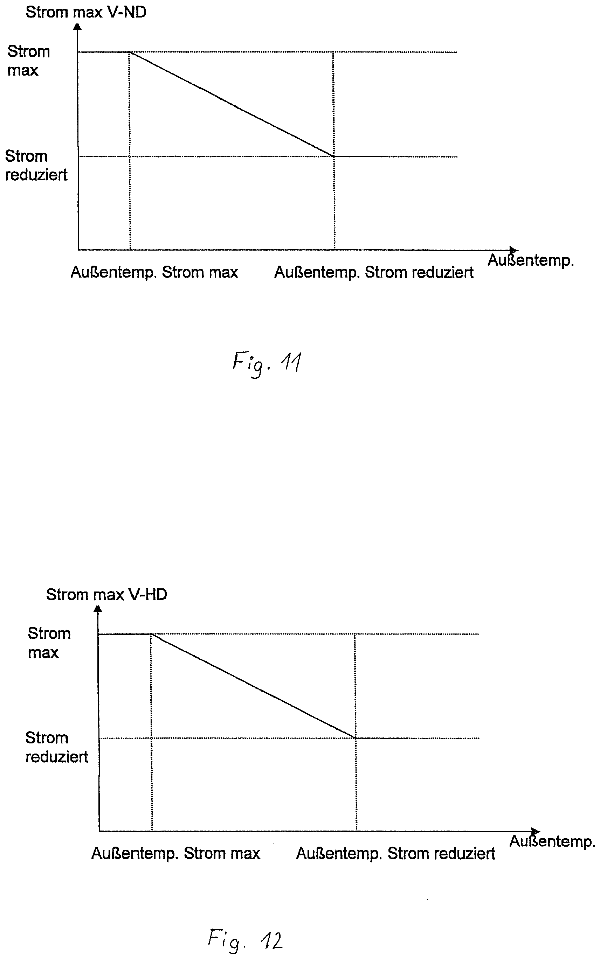

Fig. 11 zeigt einen Graphen zur Veranschaulichung des Zusammenhangs zwischen dem maximalen Strom und einer Außentemperatur. Hierbei soll eine Berechnung des Maximalstromes erfolgen in Abhängigkeit der Außentemperatur. Die Eingangsgröße ist hierbei die Außentemperatur und die Ausgangsgröße ist der maximale Strom. Gemäß der Erfindung können zwei Stützstellenpaare bestimmt werden, welche jeweils einen Wert der Außentemperatur und einen maximalen Strom beinhalten. Zwischen diesen beiden Stützstellenpaaren wird linear interpoliert. Für Temperaturen unter der Temperatur für den maximalen Strom wird der maximale Strom konstant gehalten. Für Temperaturen oberhalb der Außentemperatur für den reduzierten Strom wird der reduzierte Strom ebenfalls konstant gehalten.

Gemäß der Erfindung kann der Strom aus den Informationen hinsichtlich des Hochdruckes, des Mitteldruckes, des Niederdruckes sowie verdichterspezifischen Konstanten berechnet werden. Alternativ dazu kann der Strom gemessen werden.

Fig. 12 zeigt einen Graphen zur Veranschaulichung des Zusammenhangs zwischen dem maximalen Strom und der Außentemperatur für die Hochdruckseite. Der Strom kann wiederum gemessen oder aus anderen Werten bzw. Parametern des Kältekreises und verdichterspezifischen Parametern ermittelt werden.

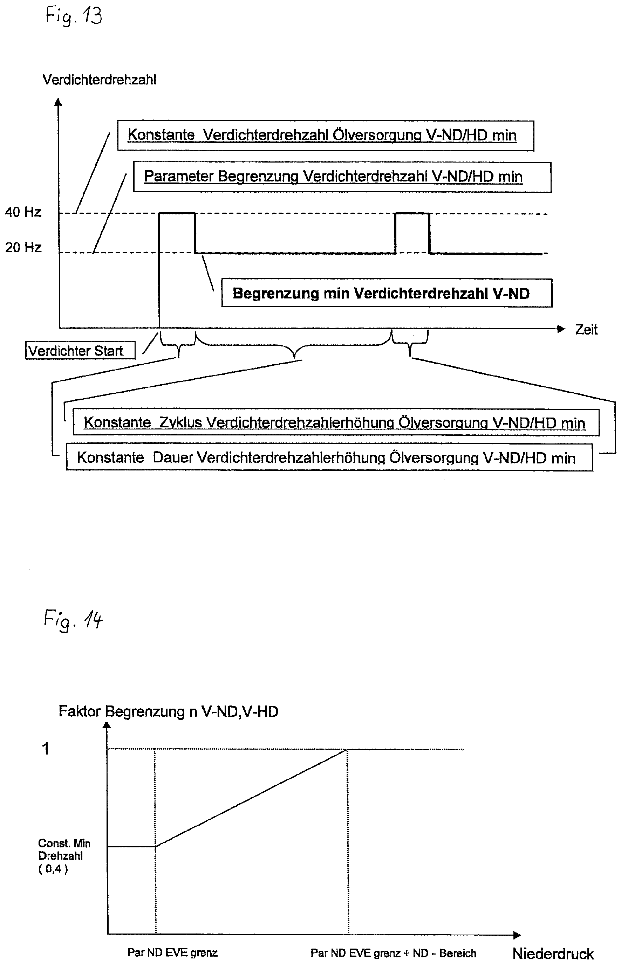

Fig. 13 zeigt einen Graphen zur Veranschaulichung der Darstellung des Verlaufs der Begrenzung der minimalen Verdichterdrehzahl über die Zeit. Gemäß der Erfindung wird zur Sicherstellung der Ölversorgung des Verdichters eine minimale Verdichterdrehzahl vorgesehen, bei welcher noch ein sicherer Verdichterbetrieb gewährleistet ist. Die minimale Verdichterdrehzahl kann als Grenzwert eingestellt werden, welche im Verdichterbetrieb nicht unterschritten werden darf. Beim Verdichterstart und bei einer ununterbrochenen Betriebsdauer des Niederdruckverdichters findet eine erzwungene Erhöhung der minimalen Verdichterdrehzahl des Niederdruckverdichters auf einen festgelegten Wert für eine festgelegte Zeit statt. Anschließend kann die minimale Drehzahl wieder reduziert werden.

Entsprechendes gilt ebenfalls für den Hochdruckverdichter.

Fig. 14 zeigt ein Diagramm zur Veranschaulichung des Zusammenhangs zwischen der Begrenzung der Verdichterdrehzahl im Niederdruck und im Hochdruck bezogen auf den Niederdruckverdichter. Gemäß der Erfindung wird die maximale Drehzahl des ersten und zweiten Verdichters auf Werte begrenzt, die ein Ansprechen des Niederdruckwächters verhindern sollen.

Gemäß der Erfindung kann eine Anlaufhilfe für den Niederdruckverdichter vorgesehen sein. Der Niederdruckverdichter wird von einem Wechselrichter gespeist, welcher zum Schutz der Leistungstransistoren mit einer Strombegrenzung vorgesehen ist. Ist das zu überwindende Moment des Verdichtermotors im aktuellen Betriebszustand beispielsweise beim Start zu hoch, dann überschreitet der Inverterstrom die Abschaltgrenze und die Motorversorgung wird unterbrochen. Der am Verdichtereingang anliegende Niederdruck beeinflusst stark den Anlaufstrom des Motors. Eine Anlaufhilfe für den Niederdruckverdichter unterstützt diesen Anlauf, indem beim Anlauf des Niederdruckverdichters zusätzlich der Hochdruckverdichter eingeschaltet wird bzw. eingeschaltet bleibt. Der Hochdruckverdichter bleibt bis zum Anlauf des Niederdruckverdichters außerplanmäßig eingeschaltet, wenn ein Übergang von einem Einverdichter-Betrieb des Hochdruckverdichters auf einen Einverdichter-Betrieb des Niederdruckverdichters erfolgen soll. Der Hochdruckverdichter wird bis zum Anlauf des Niederdruckverdichters eingeschaltet, wenn ein Startfehler erfolgt ist.

## Patentansprüche

1. Wärmepumpenvorrichtung zum Heizen eines Heizkreises, mit einem Verflüssiger (200),
einem Verdampfer (300),
einem elektronischen Expansionsventil (810),
einer Verdichtereinheit (100) mit einem ersten und zweiten Verdichter (110, 120), die in Reihe geschaltet sind, und
einer Steuereinheit (900) zum Steuern des Verdampfers (300), des Verflüssigers (200), des elektronischen Expansionsventils (800) und der Verdichtereinheit (110, 120),
wobei die Steuereinheit (900) dazu ausgestaltet ist, den Betrieb des ersten und zweiten Verdichters (110, 120) zu steuern, wobei die Steuereinheit eine Verdichtereinschalteinheit (910) aufweist, die ausgestaltet ist, ein Signal auszugeben, das den ersten Verdichter (110), den zweiten Verdichter (120) oder den ersten und zweiten Verdichter (110, 120) in Abhängigkeit einer Außentemperatur, einer Solltemperatur des Heizkreises und/oder einer am Ausgang des Kompressors erfassten Heißgastemperatur aktiviert, **dadurch gekennzeichnet, dass** die Steuereinheit (900) eine Drehzahlbegrenzungseinheit (1010) und eine Verdichterdrehzahl-Abgleicheinheit (970) aufweist, wobei die Drehzahlbegrenzungseinheit (1010) dazu ausgestaltet ist, die Drehzahlbereiche des ersten und/oder zweiten Verdichters (110, 120) zu begrenzen, und die Verdichterdrehzahl-Abgleicheinheit (970) dazu ausgestaltet ist, dass ein Abgleich der Verdichterdrehzahlen in einem Zweiverdichter-Betrieb erfolgen kann.

2. Wärmepumpenvorrichtung nach Anspruch 1, wobei die Steuereinheit (900) eine Verdichtersollleistungs-Erfassungseinheit (920) aufweist, welche die Außentemperatur als Eingangsparameter empfängt und eine geschätzte Heizleistung berechnet.

3. Wärmepumpenvorrichtung nach einem der Ansprüche 1 oder 2, wobei die Steuereinheit (900) eine Verdichtersollleistungs-Reglereinheit (930) aufweist, welche in Abhängigkeit der Heizkreissolltemperatur, einer Heizkreisisttemperatur und einem Ausgangssignal der Verdichtersollleistungs-Erfassungseinheit (920) eine Verdichtersollleistung ermittelt.

4. Wärmepumpenvorrichtung nach einem der Ansprüche 1 bis 3, wobei die Steuereinheit (900) eine Außentemperatur-Kompensationseinheit (945) aufweist, wobei die Außentemperatur-Kompensationseinheit (945) die Außentemperatur bei der Ermittlung der Sollleistung berücksichtigt.

5. Wärmepumpenvorrichtung nach einem der Ansprüche 1 bis 4, wobei die Steuereinheit (900) eine Druckverhältnis-Regeleinheit (980) aufweist, die aus dem Niederdruck, dem Mitteldruck und dem Hochdruck ein Druckverhältnis der Verdichter ermittelt.

6. Wärmepumpenvorrichtung nach einem der Ansprüche 1 bis 5, wobei die Steuereinheit (900) eine Heizgasbegrenzungseinheit (990) aufweist, welche in Abhängigkeit der Heizgastemperatur und des Ausgangssignals der Druckverhältnis-Regeleinheit (980) eine Freigabe einer Heizgasbegrenzung bestimmt.

## Claims

1. Heat pump equipment for heating a heating circuit, with
a condenser (200),
an evaporator (300),
an electronic expansion valve (810),
a compressor unit (100) with a first and second compressor (110, 120), which are switched in series, and
a control unit (900) for the control of the evaporator (300), of the condenser (200), of the electronic expansion valve (800) and of the compressor unit (110, 120),
where the control unit (900) is designed in order to control the operation of the first and second compressor (110, 120),
where the control unit has a compressor switch-on unit (910) which is designed to output a signal that activates the first compressor (110), the second compressor (120), or the first and second compressor (110, 120), dependent on an outside temperature, a setpoint temperature of the heating circuit and/or a hot gas temperature recorded at the output of the compressor, identified in that the control unit (900) has a rotation-speed limitation unit (1010) and a compressor-speed matching unit (970), where the rotation-speed limitation unit (1010) is equipped to limit the speed ranges of the first and/or second compressor (110, 120), and the compressor-speed matching unit (970) is designed to ensure that a matching of the compressor speeds can be implemented in two-compressor operation.

2. Heat pump equipment according to Claim 1, where the control unit (900) has a compressor nominal-power recording unit (920), which receives the outside temperature as input parameter and calculates an estimated heating capacity.

3. Heat pump equipment according to one of the Claims 1 or 2, where the control unit (900) has a compressor nominal-power control unit (930) which determines a compressor nominal power dependent on the heating circuit setpoint temperature, a heating circuit temperature and an output signal of the compressor nominal-power recording unit (920).

4. Heat pump equipment according to one of the Claims 1 to 3, where the control unit (900) has an outside-temperature compensation unit (945), where the outside-temperature compensation unit (945) integrates the outside temperature into the determination of the nominal power.

5. Heat pump equipment according to one of the Claims 1 to 4, where the control unit (900) has a pressure-ratio control unit (980), which determines a pressure ratio of the compressor from the low pressure, the medium pressure and the high pressure.

6. Heat pump equipment according to one of the Claims 1 to 5, where the control unit (900) has a fuel-gas limitation unit (990), which determines a release of a fuel-gas limitation dependent on the fuel-gas temperature and the output signal of the pressure ratio control unit (980).

## Revendications

1. Dispositif de pompe à chaleur pour le chauffage d'un circuit de chauffage, avec
un condenseur (200),
un évaporateur (300),
une soupape de détente électronique (810),
une unité de compresseur (100) avec un premier et un deuxième compresseur (110, 120) commutés en série et
une unité de commande (900) pour la commande de l'évaporateur (300), du condenseur (200), de la soupape de détente électronique (800) et de l'unité de compresseur (110, 120),
sachant que l'unité de commande (900) est équipée en vue de commander le fonctionnement du premier et du deuxième compresseur (110, 120),
sachant que l'unité de commande présente une unité de commutation des compresseurs (910) qui est équipée en vue d'émettre un signal qui active le premier compresseur (110), le deuxième compresseur (120) ou le premier et le deuxième compresseurs (110, 120) en fonction d'une température extérieure, d'une température théorique du circuit de chauffage et / ou d'une température des gaz chauds, captée sur la sortie du compresseur, **caractérisé en ce que** l'unité de commande (900) présente une unité de limitation de la vitesse (1010) et une unité de réglage de la vitesse de compresseur (970), sachant que l'unité de limitation de la vitesse (1010) est équipée en vue de limiter les plages de vitesse du premier et / ou du deuxième compresseur (110, 120) et que l'unité de réglage de la vitesse de compresseur (970) est équipée afin qu'un réglage des vitesses de compresseur puisse avoir lieu dans un fonctionnement à deux compresseurs.

2. Dispositif de pompe à chaleur conformément à la revendication 1, sachant que l'unité de commande (900) présente une unité de détection de la puissance nominale de compresseur (920) qui capte la température extérieure en tant que paramètre d'entrée et calcule une puissance de chauffage estimée.

3. Dispositif de pompe à chaleur conformément à l'une des revendications 1 ou 2, sachant que l'unité de commande (900) présente une unité de réglage de la puissance nominale de compresseur (930) qui détermine une puissance nominale de compresseur en fonction de la température théorique du circuit de chauffage, d'une température du circuit de chauffage et d'un signal de sortie de l'unité de détection de la puissance nominale de compresseur (920).

4. Dispositif de pompe à chaleur conformément à l'une des revendications 1 à 3, sachant que l'unité de commande (900) présente une unité de compensation de la température extérieure (945), sachant que l'unité de compensation de la température extérieure (945) prend en compte la température extérieure lors de la détermination de la puissance nominale.

5. Dispositif de pompe à chaleur conformément à l'une des revendications 1 à 4, sachant que l'unité de commande (900) présente une unité de réglage du rapport de pression (980) qui détermine un rapport de pression des compresseurs à partir de la basse pression, de la pression moyenne et de la haute pression.

6. Dispositif de pompe à chaleur conformément à l'une des revendications 1 à 5, sachant que l'unité de commande (900) présente une unité de limitation du gaz de chauffage (990) qui détermine une validation d'une limitation du gaz de chauffage en fonction de la température du gaz de chauffage et du signal de sortie de l'unité de réglage du rapport de pression (980).
